# EUROPÄISCHE PATENTSCHRIFT

(11) **EP 0 948 791 B1**
(45) Veröffentlichungstag und Bekanntmachung des Hinweises auf die Patenterteilung: **12.07.2000**
(21) Anmeldenummer: 97954716.3
(22) Anmeldetag: 29.12.1997
(51) Int. Cl.: G11B 23/04

(54) **AUSWECHSELBARES PLATTENMAGAZIN FÜR PLATTEN-WECHSLER ODER DERGLEICHEN**
REMOVABLE DISC MAGAZINE FOR A DISK CHANGER OR THE LIKE
CHARGEUR DE DISQUES INTERCHANGEABLE POUR CHANGEUR DE DISQUES OU ANALOGUE

(30) Priorität: 03.01.1997 DE 19700088
(43) Veröffentlichungstag der Anmeldung: 13.10.1999
(73) Patentinhaber: NSM AKTIENGESELLSCHAFT, 55411 Bingen (DE)
(72) Erfinder: THEIL, Wolfgang, D-55444 Waldlaubersheim (DE); HEIDERSBERGER, Börge, D-55411 Bingen (DE)
(74) Vertreter: Becker, Bernd, Dipl.-Ing.
(86) Internationale Anmeldenummer: DE9703030
(87) Internationale Veröffentlichungsnummer: WO9829867

(56) Entgegenhaltungen:
- EP-A- 0 392 620
- EP-A- 0 427 329
- EP-A- 0 709 840
- US-A- 4 691 309
- US-A- 5 457 677

## Beschreibung

Die Erfindung bezieht sich auf ein auswechselbares Plattenmagazin zum Einsetzen in ein Gerätegehäuse von Platten-Wechslern, Plattenabspielgeräten, Datenverarbeitungsanlagen oder dergleichen, mit
- einem Gehäuserahmen, in dem mehrere übereinanderliegend in Aufnahmefächern gelagerte, jeweils eine Platte aufnehmende Plattenhalter angeordnet sind,
- einem mit dem Gehäuserahmen verbundenen Deckel und
- einem federnd gelagerten Verriegelungselement, das in Ausnehmungen der Plattenhalter eingreift, und beim Einsetzen des Plattenmagazins in das Gerätegehäuse über eine Stößelstange von einem gestellfest am Gerätegehäuse angeordneten Auslöser betätigt wird und die Plattenhalter freigibt.

Es gibt eine Vielzahl von Geräten und Anlagen, in denen auswechselbare, insbesondere Compact-Discs (Platten) enthaltende Plattenmagazine verwendet werden. Solche Plattenmagazine weisen eine Mehrzahl von übereinanderliegend angeordneten Aufnahmefächern auf, in denen jeweils ein eine Platte aufnehmender Plattenhalter angeordnet ist. So kommen vor allem Platten-Wechsler, Plattenabspielgeräte und Datenverarbeitungsanlagen in Betracht. Besonders Datenarchivierungssysteme, bei denen extrem hohe Mengen von Informationen und Daten auf den Platten gespeichert werden, sind zunehmend in Anwendung, da auf den Platten-Speichermedien ganze Bibliotheken gespeichert werden können. Um vor allem in Datenverarbeitungsanlagen die auf den Platten gespeicherten Informationen und Daten auslesen und verarbeiten bzw. auf diese einschreiben zu können, ist häufig der Wechsel der Platten und damit der entsprechenden Plattenmagazine im jeweiligen Gerät erforderlich. Dies verlangt eine sichere und schnelle Handhabung der Plattenmagazine.

Ein Nachteil bekannter Plattenmagazine besteht darin, daß zwar eine Vielzahl übereinanderliegend angeordneter Plattenhalter, die jeweils eine Platte aufnehmen, im Plattenmagazin in entsprechenden Aufnahmefächern gelagert sind, jedoch eine sichere Arretierung der Plattenhalter während der Handhabung bzw. dem Transport des Plattenmagazins nicht gewährleistet ist. So kommt es häufig vor, daß während der Manipulation des Plattenmagazins die Plattenhalter verrutschen oder gar herausfallen, wodurch dabei die Platten verkratzt oder beschädigt werden. In der Regel ist eine solche Beschädigung mit einem irreparablen Datenverlust verbunden.

Aus der US-A-4 691 309 ist ein Plattenmagazin mit einem mittels einer Blattfeder gelagerten Verriegelungselement bekannt, das eine Breite aufweist, die in etwa der Höhe eines Gehäuserahmens entspricht. Das Verriegelungselement wird beim Einsetzen des Plattenmagazins in ein Gerätegehäuse von einem gestellfest angeordneten Auslöser über eine Stößelstange betätigt und gibt somit die Plattenhalter frei.

Es ist Aufgabe der Erfindung, ein auswechselbares Plattenmagazin der eingangs genannten Art zu schaffen, dessen Verriegelungselement einfach im Aufbau ist und im herausgezogenen Zustand des Plattenmagazins aus einem entsprechenden Gerät selbsttätig die darin befindlichen Plattenhalter gegen Herausfallen und Beschädigung sichert.

Erfindungsgemäß wird die Aufgabe dadurch gelöst, daß das Verriegelungselement
- über die Stößelstange mit einem am Gehäuserahmen beweglich gelagerten Schieber verbunden ist, der von dem Auslöser betätigt wird und
- als Blattfeder ausgebildet ist, deren eines Ende an einer Seite im Deckel befestigt ist und deren anderes Ende in den Gehäuserahmen hineinragt und in die Ausnehmungen der Plattenhalter eingreift.

Durch diese Maßnahme ist gewährleistet, daß sich das Verriegelungselement durch seinen federnden Charakter stets mit den Ausnehmungen aller im Plattenmagazin befindlichen Plattenhalter in Eigriff befindet, wenn das Plattenmagazin nicht in einen Platten-Wechsler, ein Plattenabspielgerät, eine Datenverarbeitungsanlage oder dergleichen eingesetzt ist, da sich eine derartige Blattfeder aus einem vorgespannten Federstahlmaterial besonders gut eignet, um eine gewünschte gegen den Schieber und in die Richtung der Ausnehmungen wirkende Federkraft aufzubauen. Wird hingegen das Plattenmagazin in einen entsprechenden Aufnahmeschacht eines solchen Gerätes eingeschoben, wirkt der Auslöser beim Einsetzen des Plattenmagazins in das Gerätegehäuse derart auf den Schieber ein, daß dieser zum Verriegelungselement hin verschoben wird. Die mit dem Schieber verbundene Stößelstange bewegt dadurch zwangsläufig das Verriegelungselement gegen seine eigene Federkraft, wodurch das Verriegelungselement außer Eingriff mit den Ausnehmungen der Plattenhalter im Plattenmagazin gelangt und diese allesamt freigegeben werden. Damit kann die Steuereinheit des entsprechenden Gerätes frei auf die Plattenhalter und die darin gelagerten Platten zugreifen. Beim erneuten Herausziehen des Plattenmagazins greift das Verriegelungselement automatisch wieder in die Ausnehmungen aller Plattenhalter im Plattenmagazin ein und sichert diese gegen Verrutschen und Herausfallen. Das Plattenmagazin kann dann ohne Probleme manipuliert und transportiert werden.

Damit das Verriegelungselement bzw. die Blattfeder auf alle im Plattenmagazin befindlichen Plattenhalter einwirkt, weist zweckmäßigerweise das in die Ausnehmungen der Plattenhalter eingreifende Ende des Verriegelungselementes eine Breite auf, die etwa der Höhe des Gehäuserahmens entspricht.

Zum Vermeiden des Verhakens des Verriegelungselementes mit den Ausnehmungen der Plattenhalter bzw. von Beschädigungen derselben, weist das in die Ausnehmungen der Plattenhalter eingreifende Ende des Verriegelungselementes eine gefalzte Kante auf. Vorteilhafterweise besitzt die gefalzte Kante einen etwa halbrunden Querschnitt.

Zweckmäßigerweise umfaßt die mit dem Deckel verbundene Wandung des Gehäuserahmens eine Durchtrittsöffnung für das Verriegelungselement, wobei bevorzugt die Durchtrittsöffnung mit einer Schräge versehen ist, deren Länge etwa der Breite des in den Gehäuserahmen hineinragenden Endes des Verriegelungselementes entspricht. Diese Durchtrittsöffnung mit der Schräge ist insbesondere für Montagezwecke des Plattenmagazins geeignet. Da vor dem Verbinden des Deckels mit dem Gehäuserahmen des Plattenmagazins das Verriegelungselement mit der Stößelstange und dem Schieber bereits im Deckelinnenraum montiert sind, muß beim Anlegen des Deckels an die entsprechende Wandung des Gehäuserahmens das breite Verriegelungselement durch die Durchtrittsöffnung etwas angewinkelt hindurchgeführt werden. Wird dann der Deckel paßgenau an den Gehäuserahmen des Plattenmagazins angelegt, kann der Deckel mit dem Gehäuserahmen verschraubt werden.

Damit eine sichere Bewegung der Stößelstange auf das Verriegelungselement übertragen wird, wird der mit der Stößelstange verbundene Schieber in einer Aussparung in der zugehörigen Wandung des Deckels geführt. Damit wird sichergestellt, daß der am Gerätegehäuse angeordnete Auslöser beim Einschieben des Plattenmagazins in die Aussparung in der Deckelwandung eingreift und den Schieber betätigt, wodurch die Plattenhalter im Plattenmagazin freigegeben werden.

Der Auslöser selbst wird von einer im Gerätegehäuse untergebrachten Steuereinheit magnetgesteuert betätigt. Auf diese Weise wird das Freigeben bzw. Arretieren des Plattenmagazins im Aufnahmeschacht des Gerätegehäuse ermöglicht wird.

Schließlich ist am Gehäuserahmen eine Sichtlinse angeordnet, durch welche hindurch visuell festgestellt werden kann, ob sich Plattenhalter und/oder Platten im Plattenmagazin befinden oder nicht.

Der der Erfindung zugrunde liegende Gedanke wird in der nachfolgenden Beschreibung anhand eines Ausführungsbeispieles, das in der Zeichnung dargestellt ist, näher erläutert. Es zeigt:
- Fig. 1: eine Draufsicht eines erfindungsgemäßen Plattenmagazins im Teilschnitt entlang der Linie I-I nach Fig. 2 ohne Platten enthaltende Plattenhalter,
- Fig. 2: eine Rückansicht des Plattenmagazins im Teilschnitt entlang der Linie II-II nach Fig. 3 ohne Platten enthaltende Plattenhalter,
- Fig. 3: eine Seitenansicht des Plattenmagazins im Schnitt entlang der Linie III-III nach Fig. 1 mit einem strichliert gezeichneten Plattenhalter und
- Fig. 4: eine Teilansicht des Plattenmagazins im Schnitt entlang der Linie IV-IV nach Fig. 2 mit einem strichliert gezeichneten Plattenhalter.

Das Plattenmagazin 1 weist einen Gehäuserahmen 2 und einen Deckel 3 auf. Der Gehäuserahmen 2 ist mit Ausnahme der dem Deckel 3 gegenüberliegenden Seite 4 allseitig geschlossen und besteht vorzugsweise aus dünnem Metallblech.

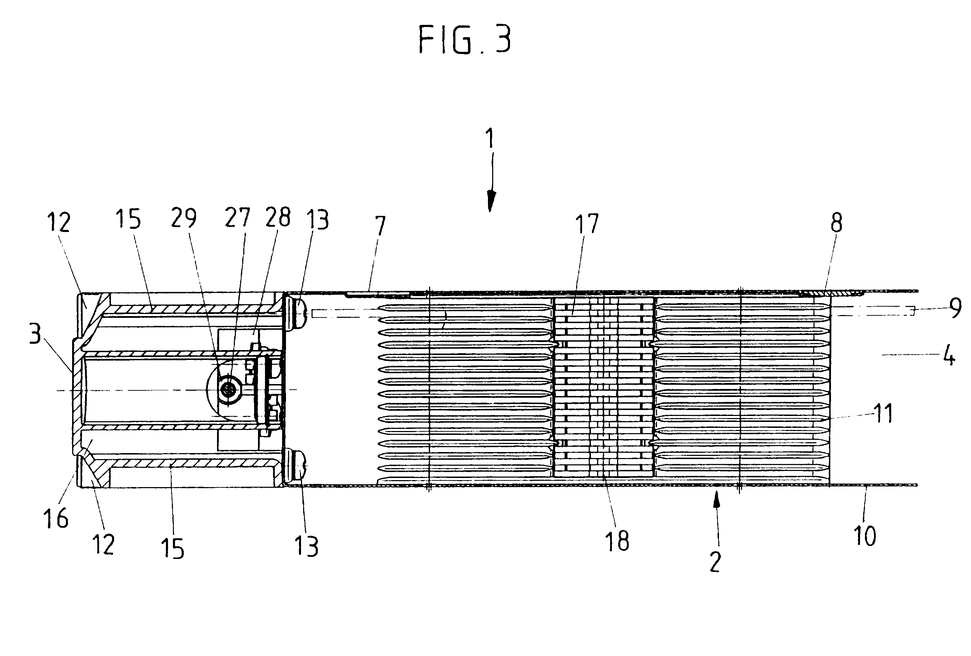

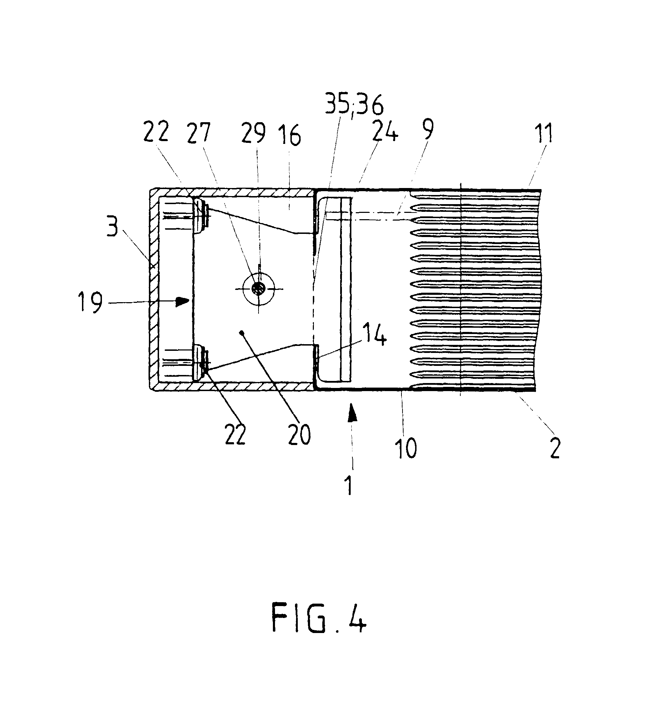

Seitlich am Gehäuserahmen 2 ist jeweils eine Führungsleiste 5 angebracht, die mit entsprechenden, nicht dargestellten Führungsschienen in einem Gerätegehäuse 6 eines Platten-Wechslers, einem Plattenabspielgerät, einer Datenverarbeitungsanlage oder dergleichen in Eingriff gebracht werden können, wenn das Plattenmagazin 1 in das Gerätegehäuse 6 eingeschoben wird. Zur Versteifung des Gehäuserahmens 2 weist dieser auf zumindest einer seiner Breitseiten eine Sicke 7 auf. Des weiteren ist auf zumindest einer Breitseite des Gehäuserahmens 2 im dem Deckel 3 entgegengesetzten Bereich eine Sichtlinse 8 ausgebildet, durch welche visuell festgestellt werden kann, ob sich im Gehäuserahmen 2 Plattenhalter 9 (Fig. 3 und 4) mit einer Platte befinden.

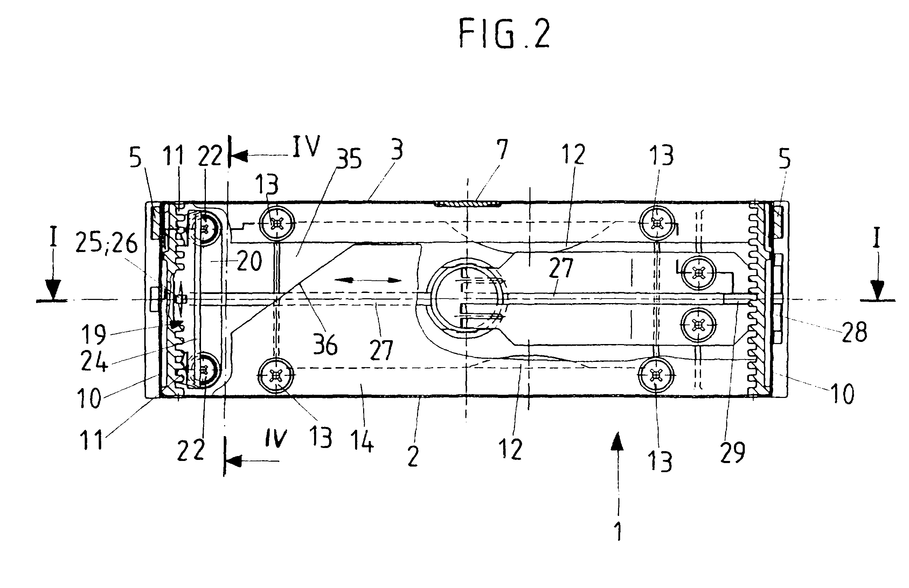

Wie insbesondere in den Fig. 2 bis 4 gezeigt ist, sind an den seitlichen Wänden 10 des Gehäuserahmens 2 jeweils eine Vielzahl übereinanderliegend angeordnete Aufnahmefächer 11 ausgebildet, in die jeweils ein eine Platte aufnehmender Plattenhalter 9 eingesetzt wird.

Der mit zwei Griffmulden versehen Deckel 3 wird mittels Schraubverbindungen 13 mit der stirnseitigen Wandung 14 verbunden. Die Schraubenschäfte werden hierbei in Schraubenaufnahmen 15 eingeschraubt, die einstückig mit dem aus Kunststoff bestehenden Deckel 3 in dessen Innenraum 16 ausgebildet sind.

Die Aufnahmefächer 11 für die Plattenhalter 9 sind in ihrem mittleren Bereich durch eine Anzahl von schmalen Halteblattfedern 17 unterbrochen, die die Plattenhalter 9 in ihrer Mittenlage durch geringen Anpreßdruck halten. Der Anpreßdruck der Halteblattfedern 17 wird durch eine unter diesen angeordnete Moosgummi-Rundschnur 18 unterstützt.

Im Innenraum 16 des Deckels 3 befindet sich ein Verriegelungselement 19, das als Blattfeder 20 ausgebildet ist. Das eine Ende 21 der Blattfeder 20 ist über zwei Schraubverbindungen 22 an der Innenseite des Deckels 3 verschraubt. Das andere Ende 23 der Blattfeder 20 bildet eine gefalzte Kante 24, die eine Breite hat, die etwa der Höhe des Plattenmagazins 1 entspricht. In ihrer Mitte besitzt die Blattfeder 20 einen Durchbruch 25, durch den eine Spitze 26 einer an der Blattfeder 20 anliegenden und sich quer durch den Innenraum 16 des Deckels 3 erstreckenden Stößelstange 27 ragt.

Das andere Ende der Stößelstange 27 mündet in einem Schieber 28 ein, der mit einer Stößelstangenaufnahme 29 versehen ist. Der Schieber 28 wird in einer in der Seitenwand 10 des Gehäuserahmens 2 eingebrachten Aussparung 30 geführt. Darüber hinaus ist am Schieber 28 eine schräg verlaufende Anschlagfläche 31 ausgebildet.

Im Gerätegehäuse 6 des entsprechenden Aufnahmegerätes für das Plattenmagazin 1 ist gestellfest ein Auslöser 32 angeordnet, dessen Nase 33 über das Gerätegehäuse 6 derart hinausragt, daß diese beim Einschieben des Plattenmagazins 1 in das Gerätegehäuse 6 an eine Anschlagfläche 31 des Schiebers 28 stößt und dabei den Schieber 28 mit der Stößelstange 27 gegen die Federkraft der Blattfeder 20 bewegt.

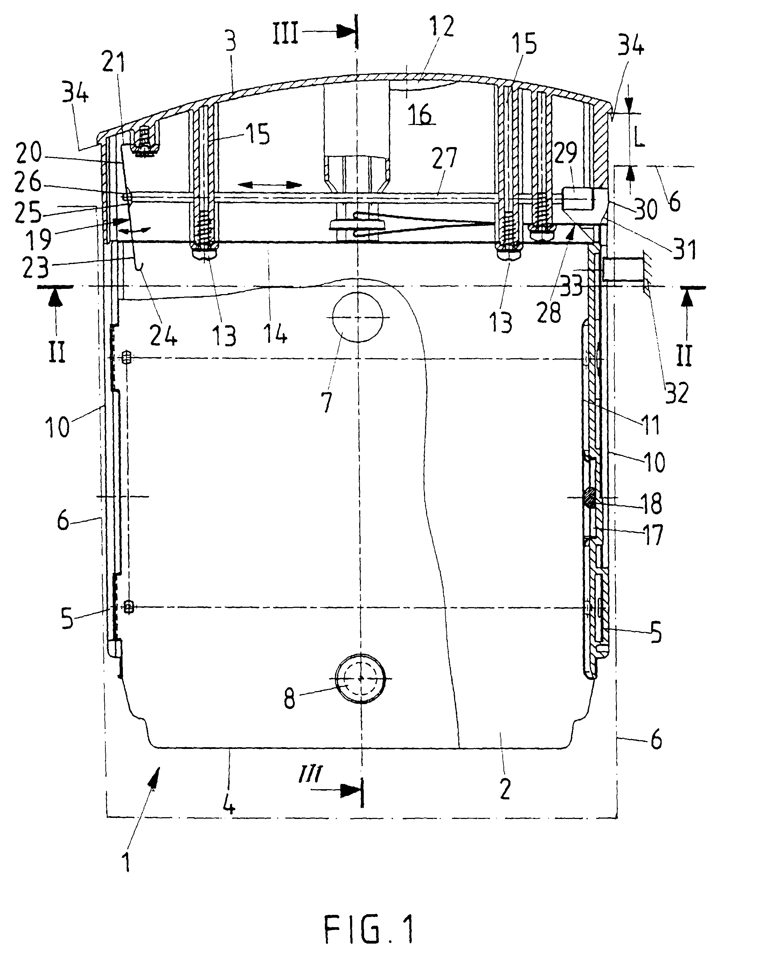

Im noch nicht vollständig eingeschobenen Zustand des Plattenmagazins 1, wie in Fig. 1 gezeigt, greift die Kante 24 der Blattfeder 20 in entsprechende, nicht dargestellte Ausnehmungen der im Plattenmagazin 1 aufgenommenen Plattenhalter 9 ein. Wird nun das Plattenmagazin 1 vollständig in das Gerätegehäuse 6 eingeschoben, bis eine am Deckel 3 ausgebildete Schulter 34 am Gerätegehäuse 6 anstößt, hat der Schieber 28 über die Stößelstange 27 die Blattfeder 20, wie durch die Doppelpfeile in den Fig. 1 und 2 angezeigt, in Richtung der entsprechenden Seitenwand 10 des Gehäuserahmens 2 bzw. des Deckels 3 gedrückt. Dadurch kommt die Kante 24 der Blattfeder 20 außer Eingriff mit den Ausnehmungen der Plattenhalter 9, wodurch diese freigegeben werden. Gemäß Fig. 1 ist das Plattenmagazin 1 zwar schon teilweise in das Gerätegehäuse 6 eingeschoben, jedoch muß das Plattenmagazin 1 noch den Weg L zurücklegen, während der beschriebene Entriegelungsvorgang der Blattfeder 20 von den Plattenhaltern 9 stattfindet.

Soll das Plattenmagazin 1 wieder aus dem Gerätegehäuse 6 entfernt werden, betätigt die im Gerätegehäuse 6 untergebrachte, nicht dargestellte Steuereinheit den Auslöser 32, so daß sich dessen Nase 33 zurückzieht. Dadurch wird durch die Federkraft der Blattfeder 20 die Stößelstange 27 und damit der Schieber 28 in seine Ausgangsstellung zurückbewegt, wobei die Kante 24 der Blattfeder 20 wieder in die Ausnehmungen der Plattenhalter 9 eingreift und diese arretiert.

Konstruktionsbedingt erfolgt die Montage des Verriegelungselementes 19 mit der Stößelstange 27 und dem Schieber 28 im Innenraum 16 des Deckels 3, bevor dieser mittels der Schraubverbindungen 13 mit der Wandung 14 des Gehäuserahmens 2 des Plattenmagazins 1 verbunden wird. Damit der Dekkel 3 mit der darüber hinausragen Blattfeder 20 auf einfache Weise an die Wandung 14 des Gehäuserahmens angesetzt werden kann, ist die Wandung 14 mit einer Durchtrittsöffnung 35 versehen, die eine Schräge 36 aufweist. Durch leichtes Anwinkeln des Deckels 3 bei dessen Anlegen an die Wandung 14 des Gehäuserahmens 2 gelangt das vordere Ende 23 der Blattfeder 20 problemlos durch die Durchtrittsöffnung 35, so daß der Deckel 3 mit dem Gehäuserahmen 2 verschraubt werden kann.

## Patentansprüche

1. Auswechselbares Plattenmagazin (1) zum Einsetzen in ein Gerätegehäuse (6) von Platten-Wechslern, Plattenabspielgeräten, Datenverarbeitungsanlagen oder dergleichen, mit
- einem Gehäuserahmen (2), in dem mehrere übereinanderliegend in Aufnahmefächern (11) gelagerte, jeweils eine Platte aufnehmende Plattenhalter (9) angeordnet sind,
- einem mit dem Gehäuserahmen (2) verbundenen Deckel (3) und
- einem federnd gelagerten Verriegelungselement (19), das in Ausnehmungen der Plattenhalter (9) eingreift, und beim Einsetzen des Plattenmagazins (1) in das Gerätegehäuse (6) über eine Stößelstange (27) von einem gestellfest am Gerätegehäuse (6) angeordneten Auslöser betätigt wird und die Plattenhalter (9) freigibt,
dadurch gekennzeichnet, daß das Verriegelungselement (19)
- über die Stößelstange (27) mit einem am Gehäuserahmen (2) beweglich gelagerten Schieber (28) verbunden ist, der von dem Auslöser (32) betätigt wird und
- als Blattfeder (20) ausgebildet ist, deren eines Ende (21) an einer Seite im Deckel (3) befestigt ist und deren anderes Ende (23) in den Gehäuserahmen (2) hineinragt und in die Ausnehmungen der Plattenhalter (9) eingreift.

2. Auswechselbares Plattenmagazin nach Anspruch 1, dadurch gekennzeichnet, daß das in die Ausnehmungen der Plattenhalter (9) eingreifende Ende (23) des Verriegelungselementes (19) eine Breite aufweist, die etwa der Höhe des Gehäuserahmens (2) entspricht.

3. Auswechselbares Plattenmagazin nach den Ansprüchen 1 und 2, dadurch gekennzeichnet, daß das in die Ausnehmungen der Plattenhalter (9) eingreifende Ende (23) des Verriegelungselementes (19) eine gefalzte Kante (24) aufweist.

4. Auswechselbares Plattenmagazin nach einem der Ansprüche 1 bis 3, dadurch gekennzeichnet, daß die mit dem Deckel (3) verbundene Wandung (14) des Gehäuserahmens (2) eine Durchtrittsöffnung (35) für das Verriegelungselement (19) aufweist.

5. Auswechselbares Plattenmagazin nach einem der Ansprüche 1 bis 4, dadurch gekennzeichnet, daß die Durchtrittsöffnung (35) mit einer Schräge (36) versehen ist, deren Länge etwa der Breite des in den Gehäuserahmen (2) hineinragenden Endes (23) des Verriegelungselementes (19) entspricht.

6. Auswechselbares Plattenmagazin nach einem der Ansprüche 1 bis 5, dadurch gekennzeichnet, daß der mit der Stößelstange (27) verbundene Schieber (28) in einer Aussparung (30) in der zugehörigen Wandung des Deckels (3) geführt ist.

7. Auswechselbares Plattenmagazin nach einem der Ansprüche 1 bis 6, dadurch gekennzeichnet, daß der am Gerätegehäuse (2) angeordnete Auslöser (32) beim Einschieben des Plattenmagazins (1) in die Aussparung (30) in der Wandung des Deckels (3) eingreift und den Schieber (28) betätigt.

8. Auswechselbares Plattenmagazin nach einem der Ansprüche 1 bis 7, dadurch gekennzeichnet, daß der Auslöser (32) von einer im Gerätegehäuse (6) untergebrachten Steuereinheit magnetgesteuert betätigbar ist.

9. Auswechselbares Plattenmagazin nach einem der Ansprüche 1 bis 8, dadurch gekennzeichnet, daß am Gehäuserahmen (2) eine Sichtlinse (8) angeordnet ist.

## Claims

1. Interchangeable disc magazine (1) for insertion into an appliance housing (6) of disc changers, disc players, data processing systems or the like, having
- a housing frame (2), in which are disposed a plurality of disc holders (9), which are mounted above one another in accommodation compartments (11) and each accommodate one disc,
- a cover (3), which is connected to the housing frame (2), and
- a resiliently mounted locking member (19), which engages in cutaway portions of the disc holders (9) and, when the disc magazine (1) is inserted into the appliance housing (6), said locking member is actuated by a release mechanism, securedly disposed on the frame of the appliance housing (6), via a push-rod (27) and releases the disc holders (9),
characterised in that the locking member (19)
- is connected, via the push-rod (27), to a slider (28), which is displaceably mounted on the housing frame (2) and is actuated by the release mechanism (32), and
- said locking member is configured as leaf spring (20), one end (21) of which is secured to one side in the cover (3), and the other end (23) of which protrudes into the housing frame (2) and engages in the cutaway portions of the disc holders (9).

2. Interchangeable disc magazine according to claim 1, characterised in that the end (23) of the locking member (19), engaging in the cutaway portions of the disc holders (9), has a width which corresponds substantially to the height of the housing frame (2).

3. Interchangeable disc magazine according to claims 1 and 2, characterised in that the end (23) of the locking member (19), engaging in the cutaway portions of the disc holders (9), has a notched edge (24).

4. Interchangeable disc magazine according to one of claims 1 to 3, characterised in that the wall (14) of the housing frame (2), connected to the cover (3), has a through-aperture (35) for the locking member (19).

5. Interchangeable disc magazine according to one of claims 1 to 4, characterised in that the through-aperture (35) is provided with an inclination (36), the length of which corresponds substantially to the width of the end (23) of the locking member (19) protruding into the housing frame (2).

6. Interchangeable disc magazine according to one of claims 1 to 5, characterised in that the slider (28), which is connected to the push-rod (27), is guided in a recess (30) in the associated wall of the cover (3).

7. Interchangeable disc magazine according to one of claims 1 to 6, characterised in that, when the disc magazine (1) is inserted into the recess (30), the release mechanism (32) disposed on the appliance housing (2) engages in the wall of the cover (3) and actuates the slider (28).

8. Interchangeable disc magazine according to one of claims 1 to 7, characterised in that the release mechanism (32) is actuatable in a magnet-controlled manner by a control unit accommodated in the appliance housing (6).

9. Interchangeable disc magazine according to one of claims 1 to 8, characterised in that an optical lens (8) is disposed on the housing frame (2).

## Revendications

1. Magasin à disques (1) échangeable, destiné à être inséré dans un châssis (6) de changeurs de disques, de lecteurs de disques, de systèmes de traitement de données ou similaires, comportant
- un cadre (2) de châssis dans lequel sont disposés plusieurs porte-disques (9) montés superposés dans des casiers de réception (11) et recevant chacun un disque,
- un couvercle (3) relié au cadre (2) du châssis, et
- un élément de verrouillage (19), monté élastiquement, qui s'engage dans des évidements du porte-disque (9) et qui est actionné, lorsque le magasin à disques (1) est inséré dans le châssis (6), par un déclencheur solidaire du châssis (6), par l'intermédiaire d'une tige à poussoir (27), et qui libère le porte-disque (9),
caractérisé en ce que l'élément de verrouillage (19)
- est relié, par l'intermédiaire de la tige à poussoir (27), à un coulisseau (28) monté déplaçable sur le cadre (2) du châssis et qui est actionné par le déclencheur (32),
- est réalisé en tant que ressort à lame (20) dont une extrémité (21) est fixée à un côté du couvercle (3) et dont l'autre extrémité (23) pénètre à l'intérieur du cadre (2) du châssis et s'engage dans les évidements du porte-disque (9).

2. Magasin à disques échangeable selon la revendication 1, caractérisé en ce que l'extrémité (23), qui s'engage dans les évidements du porte-disque (9), de l'élément de verrouillage (19) présente une largeur qui correspond à peu près à la hauteur du cadre (2) du châssis.

3. Magasin à disques échangeable selon les revendications 1 et 2, caractérisé en ce que l'extrémité (23), qui s'engage dans les évidements du porte-disque (9), de l'élément de verrouillage (19) présente un bord (24) replié.

4. Magasin à disque échangeable selon l'une des revendications 1 à 3, caractérisé en ce que la paroi (14), reliée au couvercle (3), du cadre (2) du châssis présente une ouverture de passage (35) pour l'élément de verrouillage (19).

5. Magasin à disques échangeable selon l'une des revendications 1 à 4, caractérisé en ce que l'ouverture de passage (35) est pourvue d'une surface oblique (36) dont la longueur correspond à peu près à la largeur de l'extrémité (23) de l'élément de verrouillage (19) qui pénètre à l'intérieur du cadre (2) du châssis.

6. Magasin à disques échangeable selon l'une des revendications 1 à 5, caractérisé en ce que le coulisseau (28) relié à la tige à poussoir (27) est guidé dans une découpe (30) de la paroi correspondante du couvercle (3).

7. Magasin à disques échangeable selon l'une des revendications 1 à 6, caractérisé en ce que le déclencheur (32) disposé sur le châssis (2) s'engage dans la découpe (30) de la paroi du couvercle (2) lorsque le magasin à disques (1) est introduit, et actionne le coulisseau (28).

8. Magasin à disques échangeable selon l'une des revendications 1 à 7, caractérisé en ce que le déclencheur (32) peut être actionné, de manière commandée par un aimant, par une unité de commande logée dans le châssis (6).

9. Magasin à disques échangeable selon l'une des revendications 1 à 8, caractérisé en ce qu'une lentille de visualisation (8) est disposée sur le cadre (2) du châssis.
